# EUROPÄISCHE PATENTSCHRIFT

(11) **EP 1 490 618 B1**
(45) Veröffentlichungstag und Bekanntmachung des Hinweises auf die Patenterteilung: **07.09.2005**
(21) Anmeldenummer: 03744786.9
(22) Anmeldetag: 06.03.2003
(51) Int. Cl.: F16L 3/223

(54) **LEITUNGSHALTER**
LINE CLIP
SUPPORT POUR CABLES OU CONDUITS

(30) Priorität: 21.03.2002 DE 10212484
(43) Veröffentlichungstag der Anmeldung: 29.12.2004
(73) Patentinhaber: A. Raymond & Cie, 38028 Grenoble (FR)
(72) Erfinder: HAUSER, Ingo, 79618 Rheinfelden (DE)
(74) Vertreter: Rüttgers, Joachim
(86) Internationale Anmeldenummer: PCT/EP2003/002268
(87) Internationale Veröffentlichungsnummer: WO 2003/081106

(56) Entgegenhaltungen:
- EP-A- 0 454 876
- EP-A- 0 683 343
- DE-A- 2 446 133
- DE-A- 3 802 698
- US-A- 3 002 241
- US-A- 3 203 655

## Beschreibung

Die Erfindung bezieht sich auf einen Leitungshalter zur Befestigung von nebeneinander verlaufenden Versorgungsleitungen unterschiedlicher Art oder von anderen langgestreckten Bauteilen an einem Trägerbauteil und / oder zum gegenseitigen Festlegen solcher nebeneinander verlaufender Versorgungsleitungen oder langgestreckter Bauteile bestehend aus einem Aufnahmeteil mit daran ausgebildeten, den betreffenden Leitungsquerschnitten angepassten Haltemulden und beidseitig der Haltemulden angeformten, einander zugeneigten Klemmschenkeln, die sich in Längsrichtung der aufzunehmenden Leitungen nur über einen Teilabschnitt des Aufnahmeteils erstrecken, und mit einem über das Aufnahmeteil schlagbaren Sicherungsbügel mit daran zu den Haltemulden des Aufnahmeteils komplementär ausgebildeten, ebenfalls den Leitungsquerschnitten angepassten Gegenmulden, wobei an den beiden Enden des Aufnahmeteils und des Sicherungsbügels Rastelemente angeformt sind, die beim Überschlagen des Sicherungsbügels auf das Aufnahmeteil gegenseitig in sich verrasten.

Eine derartiger Leitungshalter ist aus der DE 24 46 133 A1 bekannt, bei dem die am Aufnahmeteil angeformten, benachbarten Klemmschenkel verschiedener Leitungen eine gemeinsame Wurzel haben, sich nach oben schwalbenschwanzartig teilen und dabei entgegengesetzt schellenartig gebogen sind. Nachteilig bei diesem Leitungshalter ist insbesondere bei einer großen Anzahl von zu haltenden Leitungen eine verhältnismäßig große Abmessung in Querrichtung.

Aus der EP 0 683 343 A2 ist ein Leitungshalter bekannt, der Paare von gleichartig ausgebildeten; beidseitig von Haltemulden in Längsrichtung der Haltemulden einander gegenüberliegenden Klemmschenkel aufweist, wobei die Klemmschenkelpaare von nebeneinander angeordneten Haltemulden in Längsrichtung versetzt angeordnet sind. Bei diesem Leitungshalter sind anstelle eines das Aufnahmeteil überschlagenden Sicherungsbügels an den Klemmschenkeln Flügelabschnitte angesetzt, die in Richtung der Haltemulden weisen. Nachteilig bei diesem Leitungshalter ist die Gefahr, dass sich bei einer verhältnismäßig großen Anzahl von nebeneinander angeordneten Leitungen das Aufnahmeteil durchbiegt und Leitungen aus den Haltemulden herausrutschen können.

Es besteht allgemein das Bedürfnis, insbesondere im Fahrzeugbau, mehrere Versorgungsleitungen unterschiedlicher Art, also z.B. für Kraftstoff und/oder Stromkabel, auf möglichst engem Raum unterzubringen und dabei gegenseitig und auch zum Trägerbaüteil, beispielsweise an einem Karosserieblech, zu fixieren. Dabei dürfen sich die Versorgungsleitungen selbstverständlich nicht gegenseitig stören und auch ihre Montage darf nicht unnötig behindert werden. Durch die DE 38 02 698 A1 ist ein Leiturigshalter bekannt, bei dem auf der einen Seite neben dem auf einen Bolzen aufsteckbaren Klemmkörper eine Haltemulde und auf dessen anderen Seite nebeneinander zwei Haltemulden für Rohrleitungen vorgesehen sind. Zu jeder Haltemulde gehören dabei zwei Klemmschenkel, die die betreffende Rohrleitung schellenartig umfassen. Die benachbarten Klemmschenkel der beiden nebeneinander angeordneten Haltemulden halten dabei einen Abstand zueinander, in den nach dem Einlegen der Leitungen beim Schließen des Sicherungsbügels dieser mit einem Klemmelement eingreift. Durch den Abstand zwischen den Haltemulden und den benachbarten Klemmschenkeln behindem sich die Leitungen auch bei der Montage zwar nicht. Andererseits benötigt dieser Leitungshalter für insgesamt nur drei Versorgungsleitungen verhältnismäßig viel Raum, was sich noch nachteiliger auswirkt, wenn weitere Versorgungsleitungen hinzukommen.

Durch die EP 0 454 876 B1 ist ein zweiteiliger Leitungshalter bekannt, bei dem zwei benachbarte Haltemuiden am Aufnahmeteil durch einen gemeinsamen Klemmschenkel getrennt sind und an diesem, in Längsrichtung der aufzunehmenden Leitungen versetzt, entgegengesetzt gerichtete Haken angeformt sind, die sich schellenförmig an die Leitungen anlegen. Trotz der in Längsrichtung versetzten Haken kann hier eine Behinderung bei der Montage der Leitungen nicht völlig ausgeschlossen werden, wenn die eine Haltemulde bereits bestückt und eine Leitung in die benachbarte Haltemulde eingelegt werden soll.

Aufnahmeteil und Sicherungsbügel dieser bekannten Leitungshalter weisen an ihren schmalen Enden Rastelemente auf, die beim Schließen des Sicherungsbügels gegenseitig in sich verrasten. Es hat sich gezeigt, dass bei der Tendenz, immer mehr verschiedene Leitungen mit einem Leitungshalter festzulegen, diese Verrastung an den beiden Enden nicht mehr ausreichend sein kann. Mit steigender Anzahl von Leitungen müssen die Leitungshalter immer breiter werden; und Aufnahmeteil und Sicherungsbügel neigen dabei schließlich dazu, sich zur Mitte hin aufzuwölben.

Aufgabe der Erfindung ist es, einen Leitungshalter der eingangs genannten Art so weiterzubilden, dass mehrere unterschiedliche Versorgungsleitungen platzsparend gegenseitig und an einem Trägerteil festgelegt werden können, wobei auch bei einer relativ großen Anzahl an aufzunehmenden Leitungen ein Aufwölben des Sicherungsbügels und/oder des Aufnahmeteils weitgehend vermieden ist.

Diese Aufgabe wird bei einem Leitungshalter der eingangs genannten Art erfindungsgemäß dadurch gelöst, dass die Klemmschenkel mehrerer nebeneinander verlaufender Haltemulden paarweise ohne gegenseitige Berührung sowohl in Längsrichtung als auch in Querrichtung gegeneinander versetzt sind, wobei sich die benachbarten Klemmschenkel zweier Haltemulden teilweise überlappen, und dass die Klemmschenkel mindestens einer Haltemulde in Längsrichtung der aufzunehmenden Leitung zueinander versetzt sind.

Dadurch, dass bei dem erfindungsgemäßen Leitungshalter die Klemmschenkel in Bezug aufeinander in zwei Richtungen versetzt sind, wird auch bei einer verhältnismäßig großen Anzahl von zu haltenden Leitungen ein wenig raumgreifender Aufbau ermöglicht, der dazu führt, dass die Abmessungen des Trägerteiles und des Sicherungsbügels unter Verringerung der Gefahr unerwünschter Deformationen relativ klein gehalten werden können.

Weitere zweckmäßige Ausgestaltungen der Erfindung sind Gegenstand der Unteransprüche.

Die Erfindung wird im folgenden anhand der anhängenden Zeichnungen beispielhaft näher beschrieben. Es zeigen:
- Fig. 1: eine perspektivische Ansicht einer ersten Ausführungsform der Erfindung in verkleinertem Maßstab und noch offenem Zustand,
- Fig. 2: eine Seitenansicht der Ausführungsform gemäß Fig. 1 in geschlossenem Zustand,
- Fig. 3: einen entlang der Achse A - A geführten Schnitt durch die Ausführungsform gemäß Fig. 1 in größerem Maßstab,
- Fig. 4: eine Draufsicht auf die Ausführungsform gemäß Fig. 1 im Maßstab der Fig.3,
- Fig. 5: eine gegenüber Fig. 4 um 90° gekippte Ansicht derselben Ausführungsform,
- Fig. 6: eine perspektivische Ansicht einer zweiten Ausführungsform der Erfindung in verkleinertem Maßstab und noch offenem Zustand,
- Fig. 7: eine Seitenansicht der Ausführungsform gemäß Fig. 6 in geschlossenem Zustand,
- Fig. 8: eine Seitenansicht der Ausführungsform gemäß Fig. 6 in größerem Maßstab und noch geöffnetem Zustand,
- Fig. 9: eine Draufsicht auf die Ausführungsform gemäß Fig. 6 Im Maßstab der Fig. 8 und in geöffnetem Zustand,
- Fig. 10: eine Schnittansicht entlang der Achse A - A in Fig. 9,
- Fig. 11: eine Schnittansicht gemäß Fig. 10 in geschlossenem Zustand dieser Ausführungsform,
- Fig.12: eine perspektivische Ansicht einer dritten Ausführungsform der Erfindung in verkleinertem Maßstab und offenem Zustand,
- Fig. 13: eine Seitenansicht der Ausführungsform gemäß Fig. 12 in geschlossenem Zustand, .
- Fig. 14: eine Seitenansicht der Ausführungsform gemäß Fig. 12 in größerem Maßstab und offenem Zustand,
- Fig. 15: eine Draufsicht auf die Ausführungsform gemäß Fig. 12 im Maßstab der Fig. 14 und offenem Zustand,
- Fig. 16: die Seitenansicht einer vierten Ausführungsform der Erfindung in größerem Maßstab und offenem Zustand,
- Fig. 17: die Draufsicht auf die Ausführungsform gemäß Fig. 16 und
- Fig. 18: eine Seitenansicht der Ausführungsform gemäß Fig. 16 in verkleinertem Maßstab und geschlossenem Zustand.

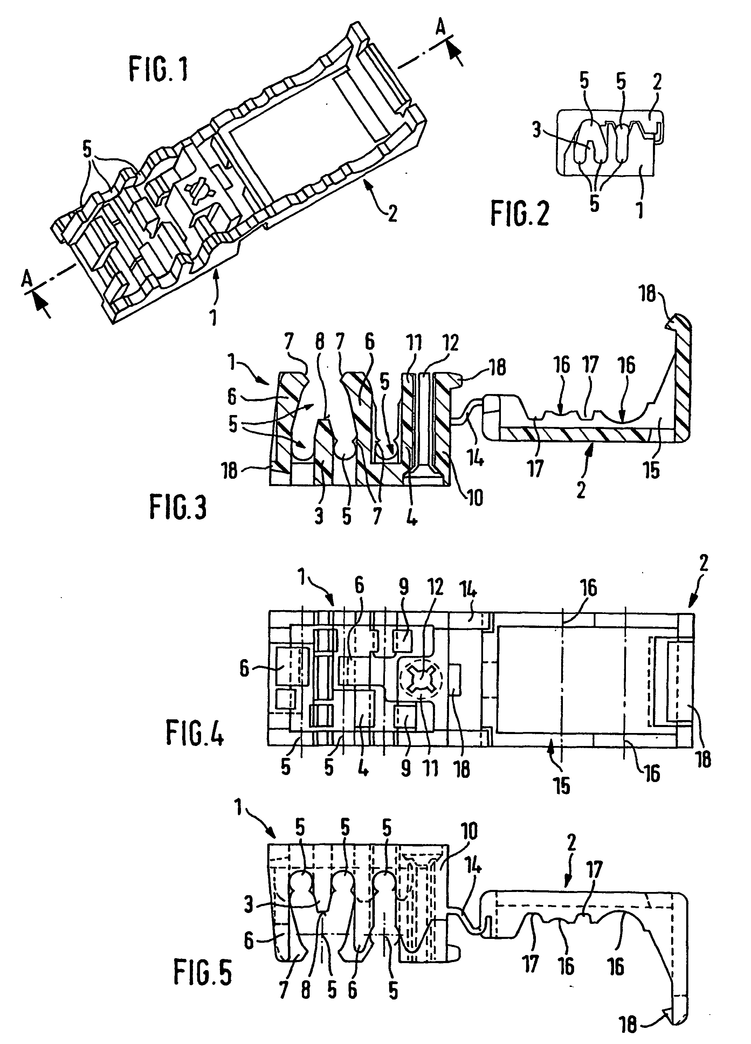

Eine erste Ausführungsform der Erfindung ist in den Fig. 1 bis **5** dargestellt. Der Leitungshalter besteht aus einem Aufnahmeteil **1** mit im wesentlichen rechteckigem Grundriss und einem an seiner einen Schmalseite mit ihm gelenkig verbundenen Sicherungsbügel **2.** Im Aufnahmeteil **1** sind zunächst auf gleicher Höhe nebeneinander liegend und durch Trennwände **3, 4** voneinander getrennt drei Haltemulden **5** für Versorgungsleitungen eines Querschnitts, im Beispiel von einem Durchmesser von **4,75** mm, vorgesehen. Die dem freien Ende des Aufnahmeteils **1** näher liegenden Haltemulden **5** bilden ein Haltemuldenpaar und sind durch eine niedere, konisch zulaufende Trennwand **3** voneinander getrennt; gemeinsam werden sie von beidseitig hochgezogenen, einander zugewölbten Klemmschenkeln **6** gefässt, an deren oberen Enden aufeinander zu gerichtete Klemmnasen **7** angeformt sind. Die Klemmnasen **7** sind dabei so geformt, dass ihre Innenflächen zusammen mit der Stirnfläche **8** der Trennwand **3** Abschnitte eines nach oben offenen Kreisbogens beschreiben, dessen Durchmesser dem Querschnitt einer weiteren Versorgungsleitung, im dargestellten Beispiel **10** mm, entspricht. Der innere Klemmschenkel **6** befindet sich auf einer Linie mit der durch diesen Klemmschenkel **6** zweigeteilten Trennwand **4** zur innen liegenden Haltemulde **5,** die auf ihrer anderen Seite begrenzt wird von zwei seitlich hochragenden Streben **9** und einer zwischen diesen liegenden, an der Innenwand **10** des Aufnahmeteils **1** angeformten Befestigungssäule **11**. In dieser Befestigungssäule **11** ist ein Durchgangsloch **12** vorgesehen zur Aufnahme eines Bolzen oder einer Schraube, mit der der Leitungshalter an einem nicht dargestellten Trägerbauteil befestigt werden kann. An den Trennwänden **3, 4** und Streben **9** können weitere Klemmnasen **7** vorgesehen sein, die die Haltemulden **5** in ihrem Querschnitt zu einem nach oben offenen Teilkreis formen. Die einander zugewandten Innenflächen der Trennwände **4** und des inneren Klemmschenkels **6** einerseits und der Streben **9** und der Befestigungssäule **11** andererseits sind nahe ihrem freien Ende und im Abstand über der innen liegenden Haltemulde **5** wiederum entsprechend dem Querschnitt einer weiteren Versorgungsleitung geformt.

Das hier beispielhaft beschriebene Aufnahmeteil 1 kann somit auf engem Raum insgesamt fünf verschiedene Versorgungsleitungen auf zwei übereinander liegenden Ebenen aufnehmen, nämlich in den Haltemulden **5,** zwischen den freien Enden der Streben **9** und der Trennwände **4** und zwischen der Stirnfläche **8** der Trennwand **3** und den Klemmnasen **7** der federnden Klemmschenkel **6,** ohne dass sich die Versorgungsleitungen stören und ohne dass ihre Montage behindert wird. Dies wird im Grunde dadurch erreicht, dass die Klemmelemente **6, 7** für die einzelnen Versorgungsleitungen versetzt und sich zumindest teilweise überlappend so angeordnet sind, dass sie sich gegenseitig nicht oder nur minimal beeinflussen oder beim Auffedern behindern können.

Mit der Innenwand **10** des Aufnahmeteils **1** durch schmale Stege **14** gelenkig verbunden ist der rechteckige Sicherungsbügel **2,** der an seinen beiden Längsseiten jeweils einen hochstehenden Rand **15** aufweist. In diesen Rändern **15** sind jeweils teilkreisförmige Gegenmulden **16** vorgesehen, die beim Überschlagen des Sicherungsbügels **2** über das Aufnahmeteil **1** die zwischen den freien Enden der Klemmschenkel **6,** bzw. den Klemmnasen **7** und den freien Enden der Trennwände **4** und der Streben **9** definierten Kreisbögen ergänzen bzw. schließen, so dass die zuvor eingelegten Versorgungsleitungen sicher an ihrem Platz gehalten werden. Außerdem befinden sich in den Rändern **15** Ausnehmungen **17,** in die beim Überschlagen des Sicherungsbügels **2** die Enden der Streben **9** und der Trennwände **4** passen.

An den beiden Schmalseiten von Aufnahmeteil **1** und Sicherungsbügel **2** sind, wie an sich bekannt, zusammenwirkende Rastelemente **18** vorgesehen, die beim Umschlagen des Sicherungsbügels **2** ineinander greifen und so den Leitungshalter sicher geschlossen halten.

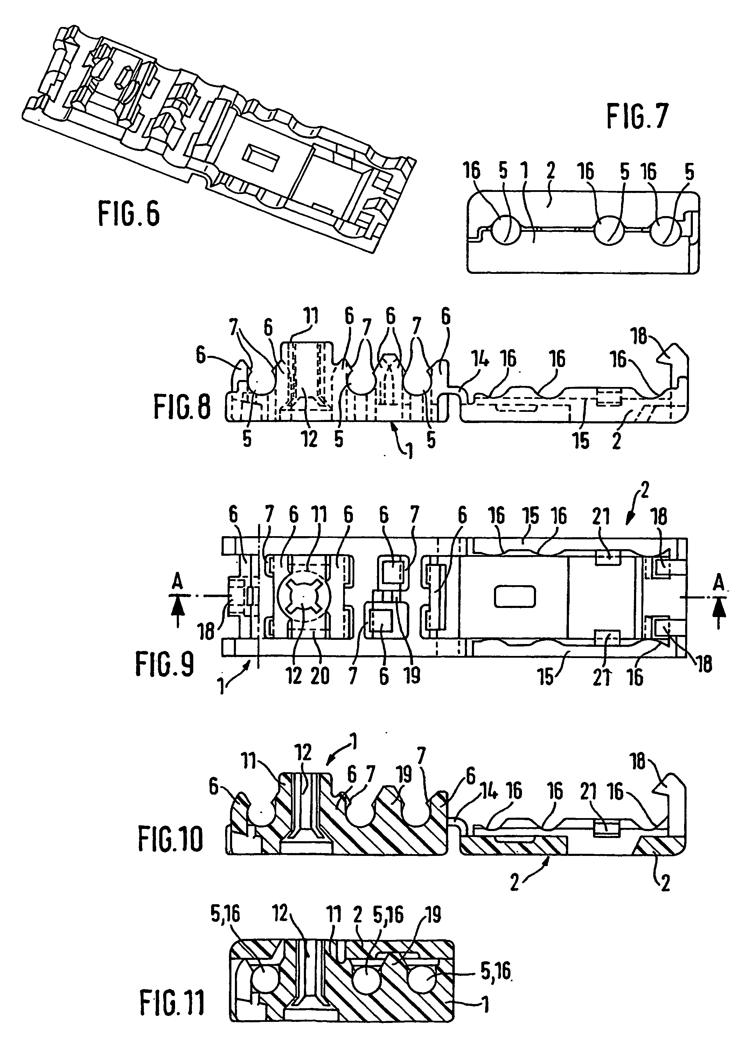

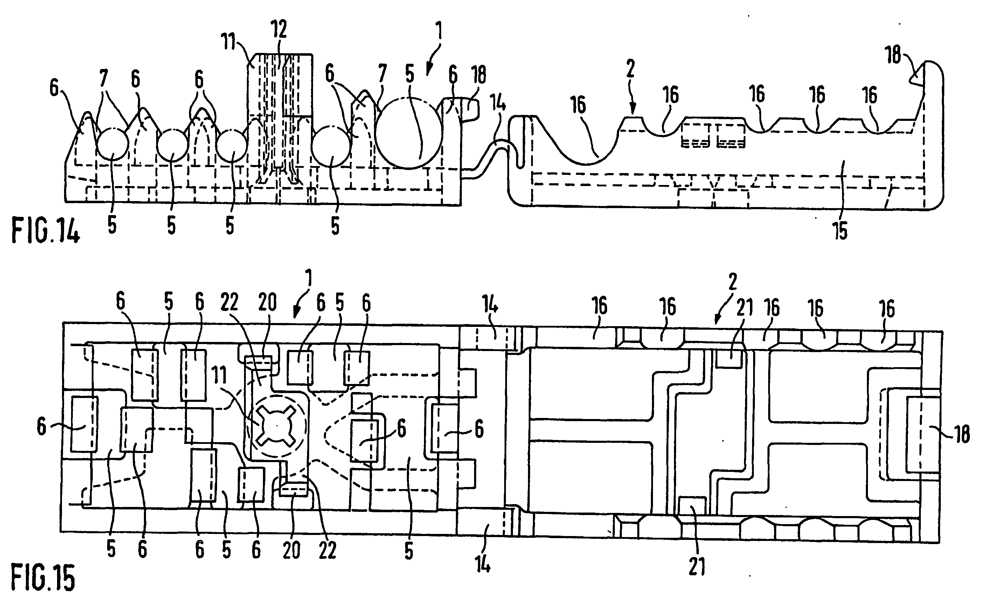

In den Fig. 6 bis 11 ist eine zweite Ausführungsform der Erfindung dargestellt. Die Grundform ist die gleiche wie oben beschrieben; ein rechteckiges Aufnahmeteil **1** und ein rechteckiger Sicherungsbügel **2** sind an ihren benachbarten Schmalseiten gelenkig miteinander verbunden. Im Aufnahmeteil **1** sind Haltemulden **5** für hier drei Versorgungsleitungen vorgesehen, die von schellenartig geformten, auffederbaren Klemmschenkeln **6,** mit einander zugewandten Klemmnasen **7** zur Aufnahme der Versorgungsleitungen gefasst sind. Eine Befestigungssäule **11** mit Durchgangsloch **12** zur Aufnahme eines Befestigungsbolzens oder einer Befestigungsschraube trennt hier eine dem freien Ende des Aufnahmeteils **1** nächst verlaufende Haltemulde **5** mit ihren Klemmschenkeln **6** von einem Haltemuldenpaar **5**. Auch die inneren, einander unmittelbar benachbarten Klemmschenkel **6** dieser beiden Haltemulden **5** sind gänzlich unabhängig voneinander; sie erstrecken sich dazu in Längsrichtung der aufzunehmenden Leitungen jeweils nur über ein Teilstück der betreffenden Haltemulde **5** und sind sowohl in Längsrichtung der Haltemulden **5** als auch in Richtung der Querachse versetzt angeordnet. Vorzugsweise können sich dabei, wie am besten aus den Fig. 8 und 9 zu ersehen ist, die benachbarten Klemmschenkel **6** zweier Haltemulden **5** in Richtung der Querachse überlappen. Durch diese Anordnung und Ausgestaltung werden auch die inneren Klemmschenkel **6** voneinander völlig getrennt, so dass beim Einlegen der Versorgungsleitungen keinerlei Behinderung eintreten kann, und dennoch kommen wegen der versetzten und sich überlappenden Anordnung die Leitungen platzsparend sehr nahe beieinander zu liegen. Zwischen den zueinander versetzten Klemmschenkeln **6** kann auf der Querachse ein Versteifungselement **19** angeordnet sein, um eine Fehlmontage auf den Halteelementen zu verhindern und diese vor Beschädigung zu schützen.

Wird nach dem Einlegen der Versorgungsleitungen der Sicherungsbügel **2** über das Aufnahmeteil **1** geschlagen, so ergänzen auch hier in den längsseitigen Rändern **15** des Sicherungsbügels **2** vorgesehene Gegenmulden **16** die Haltemulden **5**, zu einem im Querschnitt geschlossenen Kreis, siehe Fig. 7, und die Leitungen sind sicher festgelegt. Neben den an den Schmalseiten des Aufnahmeteils **1** und des Sicherungsbügels **2** in bekannter Weise vorgesehenen und zusammenwirkenden Rastelementen **18,** die nach dem Umlegen des Sicherungsbügels **2** den Leitungshalter geschlossen halten, kann noch eine weitere, in dieser Weise wirkende Sicherung vorgesehen sein. Nach der dargestellten Ausführungsform sind dazu beidseitig an der Befestigungssäule **11** abstehende Rastnasen **20** vorgesehen, die mit an den beiden Rändern **15** des Sicherungsbügels **2** angeformten, nach innen gerichteten Krallen **21** zusammenwirken. Diese zusätzliche Sicherung ist insbesondere bei Leitungshaltem von Vorteil, die für die Aufnahme einer größeren Anzahl von Leitungen ausgebildet sind.

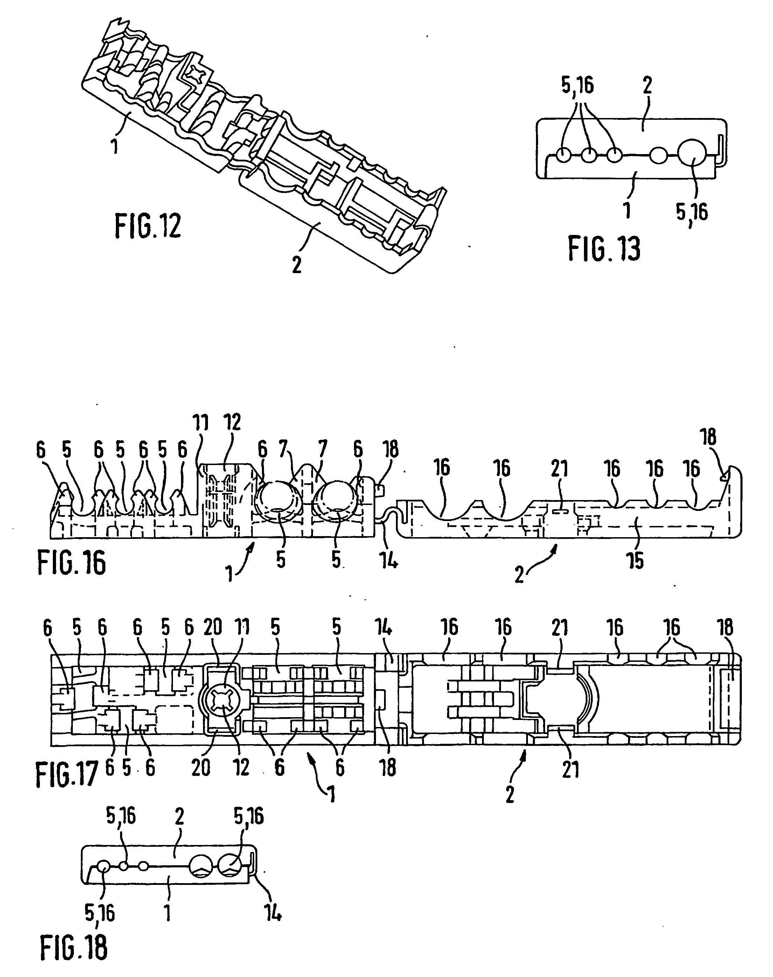

In den Fig. 12 bis 15 ist eine Ausführungsform der Erfindung dargestellt, die, ausgehend von der bereits beschriebenen Grundform, zur Halterung und gegenseitigen Festlegung von fünf verschiedenen Versorgungsleitungen in einer Ebene ausgelegt ist. In dem rechteckigen Aufnahmeteil **1** sind beidseits der Befestigungssäule **11** mit Durchgangsloch **12** Haltemulden **5** für fünf verschiedene Versorgungsleitungen auch unterschiedlichen Querschnitts vorgesehen. Zwischen dem freien Ende des Aufnahmeteils **1** und der Befestigungssäule **11** sind im dargestellten Beispiel Haltemulden **5** für drei Leitungen gleichen Querschnitts und zwischen der Befestigungssäule **11** und dem mit dem Sicherungsbügel **2** verbunden Ende Haltemulden **5** für zwei Leitungen unterschiedlichen und größeren Querschnitts vorgesehen. Jede dieser Haltemulden **5** wird von einem separaten Paar schellenartig geformter Klemmschenkel **6** mit Klemmnasen **7** gefasst. Die Klemmschenkel **6** erstrecken sich in Längsrichtung der aufzunehmenden Leitungen nur über einen Teilabschnitt des Aufnahmeteils **1** und sind paarweise sowohl in Längsrichtung der aufzunehmenden Leitungen als auch in Querrichtung so zueinander versetzt, dass keine gegenseitige Behinderung oder Beeinträchtigung der Klemmschenkel **6** oder der aufzunehmenden Leitungen auftreten kann. Vorteilhafterweise überlappen sich dabei die benachbarten Klemmschenkel **6** zweier nebeneinander verlaufender Haltemulden **5** in Querrichtung zumindest teilweise, jedoch ohne sich zu berühren. So können mehrere, im dargestellten Beispiel fünf, verschiedene Versorgungsleitungen auf engem Raum nebeneinander liegend von dem Leitungshalter aufgenommen und fixiert werden. Auch bei dieser Ausführungsform sind im Rand **15** des Sicherungsbügels **2** Gegenmulden **16** zu den Haltemulden **5** vorgesehen, die beim Überschlagen des Sicherungsbügels **2** auf den Aufnahmeteil **1** die Haltemulden **5** an den Klemmschenkeln **6** schließen bzw. sich im Bereich außerhalb der Klemmschenkel **6** dicht an die Leitungen anlegen, so dass diese sicher gefasst sind.

Neben den an den beiden Schmalseiten von Aufnahmeteil **1** und Sicherungsbügel **2** vorgesehenen Rastelementen **18** sind auch hier zur Sicherung des Leitungshalters in geschlossenem Zustand (siehe Fig. 13) an seitlich von der Befestigungssäule **11** abragenden Fortsätzen **22** Rastnasen **20** vorgesehen, die mit Krallen **21** zusammenwirken, die von den Rändern **15** des Sicherungsbügels **2** nach innen ragen.

Eine weitere von derselben Grundform ausgehende Ausführungsform der Erfindung ist in den Fig. 16 bis 18 dargestellt. Ähnlich wie bei der Ausführungsform nach den Fig. 12 bis 15 sind hier auf dem Aufnahmeteil **1** auf der einen Seite der Befestigungssäule **11** drei Haltemulden **5** für Versorgungsleitungen mit zwei unterschiedlichen Durchmessern und auf der anderen Seite der Befestigungssäule **11** zwei Haltemulden **5** für Versorgungsleitungen eines anderen, hier größeren Durchmessers vorgesehen. Die Klemmschenkel **6** der Haltemulden **5** für die zwei größeren Leitungen sind in diesem Fall nicht versetzt, sondern liegen paarweise auf einer **Linie.** Die Klemmschenkel **6** der drei erstgenannten Haltemulden **5** sind in der bereits in Bezug auf die Ausführungsform der Fig. 12 bis 15 beschriebenen Weise paarweise sowohl in Längsrichtung der aufzunehmenden Leitungen als auch in Querrichtung versetzt. Außerdem sind die beiden Klemmschenkel **6** mindestens einer Haltemulde **5,** im dargestellten Fall der zu äußerst gelegenen Haltemulde **5,** zusätzlich in Längsrichtung der aufzunehmenden Leitungen zueinander versetzt. Dies erlaubt es, die benachbarte Haltemulde **5** mit ihren Klemmschenkeln **6** nochmals näher an die erste heranzurücken, ohne dass der Klemmbereich an den Leitungen weiter verkürzt werden müsste.

## Patentansprüche

1. Leitungshalter zur Befestigung von nebeneinander verlaufenden Versorgungsleitungen unterschiedlicher Art oder von anderen langgestreckten Bauteilen an einem Trägerbauteil und / oder zum gegenseitigen Festlegen solcher nebeneinander verlaufender Versorgungsleitungen oder langgestreckter Bauteile bestehend aus einem Aufnahmeteil (1) mit daran ausgebildeten, den betreffenden Leitungsquerschnitten angepassten Haltemulden (5) und beidseitig der Haltemulden angeformten, einander zugeneigten Klemmschenkeln (6), die sich in Längsrichtung der aufzunehmenden Leitungen nur über einen Teilabschnitt des Aufnahmeteils (1) erstrecken, und mit einem über das Aufnahmeteil (1) schlagbaren Sicherungsbügel (2) mit daran zu den Haltemulden (5) des Aufnahmeteils (1) komplementär ausgebildeten, ebenfalls den Leitungsquerschnitten angepassten Gegenmuiden (16), wobei an den beiden Enden des Aufriahmeteils (1) und des Sicherungsbügels (2) Rastelemente (18) angeformt sind, die beim Überschlagen des Sicherungsbügels (2) auf das Aufnahmeteil (1) gegenseitig in sich verrasten, **dadurch gekennzeichnet, dass** die Klemmschenkel (6) mehrerer nebeneinander verlaufender Haltemulden **(5)** paarweise ohne gegenseitige Berührung sowohl in Längsrichtung als auch in Querrichtung der aufzunehmenden Leitungen gegeneinander versetzt sind, wobei sich die benachbarten Klemmschenkel **(6)** zweier Haltemulden **(5)** teilweise überlappen, und dass die Klemmschenkel **(6)** mindestens einer Haltemulde **(5)** in Längsrichtung der aufzunehmenden Leitung zueinander versetzt sind.

2. Leitungshalter nach Anspruch 1, **dadurch gekennzeichnet, dass** die Klemmschenkel **(6)** mittels einander zugeneigter Klemmnasen **(7)** Haltemulden **(5, 5')** in zwei übereinander liegenden Ebenen einfassen.

3. Leitungshalter nach Anspruch 1, **dadurch gekennzeichnet, dass** zwei in einer Ebene nebeneinander verlaufende Haltemulden **(5)** durch eine niedere Trennwand **(3)** voneinander getrennt und von zwei beidseitig hochgezogenen Klemmschenkeln **(6)** gefasst sind, wobei an den freien Enden der Klemmschenkel **(6)** einander zugeneigte und gebogene Klemmnasen **(7)** ausgebildet sind, die zusammen mit der gewölbten Stimfläche **(8)** der Trennwand **(3)** eine weitere Haltemulde **(5)** für eine weitere Versorgungsleitung bestimmen.

## Claims

1. Line clip for fastening supply lines of different types running mutually adjacent or other elongated components to a support member and/or for mutual fixing of such mutually adjacent supply lines or elongated components, comprising an accommodating member (1) with holding depressions (5) formed thereon and adapted to the relevant line cross-sections and, formed on either side of the holding depressions, clamping limbs (6) inclined towards each other, which extend in the longitudinal direction of the lines to be accommodated over only a section of the accommodating member (1), and having a securing bracket (2) foldable over the accommodating member (1) and having counter-depressions (16) thereon formed complementary to the holding depressions (5) of the accommodating member (1) and also adapted to the line cross-sections, whereby at both ends of the accommodating member (1) and of the securing bracket (2), latching elements (18) are formed which on folding over the securing bracket (2) onto the accommodating member (1), latch into one another, **characterised in that** the clamping limbs (6) of a plurality of holding depressions (5) arranged running mutually adjacent in pairs without mutual contact are mutually offset both in the longitudinal direction and in the transverse direction of the lines to be accommodated, whereby the adjacent clamping limbs (6) of two holding depressions (5) partially overlap, and that the clamping limbs (6) of at least one holding depression (5) are mutually offset in the longitudinal direction of the line to be accommodated.

2. Line clip according to claim 1, **characterised in that** the clamping limbs (6) enclose holding depressions (5, 5') in two planes lying one above the other by means of clamping noses (7) inclined towards each other.

3. Line clip according to claim 1, **characterised in that** two holding depressions (5) running adjacent to each other in one plane are separated from each other by a low separating wall (3) and are enclosed by two clamping limbs (6) rising high on both sides, whereby on the free ends of the clamping limbs (6), curved clamping noses (7) inclined towards each other are formed, which together with the curved end surface (8) of the separating wall (3), define a further holding depression (5) for a further supply line.

## Revendications

1. Support de canalisations pour la fixation en position de conduites d'alimentation de différente nature disposées parallèlement les unes aux autres ou d'autres éléments de construction de grande longueur par rapport à leur section sur un élément faisant office de support et, ou encore, pour la fixation en opposition réciproque de telles conduites d'alimentation disposées parallèlement les unes aux autres ou d'éléments de construction de grande longueur par rapport à leur section, se composant d'un élément de réception (1) dans lequel sont formées des alvéoles de retenue (5) dimensionnellement adaptées aux sections transversales des canalisations concernées et de pattes de serrage (6) inclinées en direction l'une de l'autre disposées solidaires par moulage de part et d'autre des alvéoles de retenue qui s'étendent, dans le sens longitudinal des conduites à fixer, uniquement sur une portion partielle de l'élément de réception (1) et d'un étrier de blocage (2) destiné à être rabattu sur l'élément de réception (1), qui comporte, également réalisées solidaires par moulage, des alvéoles antagonistes (16) disposées en correspondance d'accouplement avec les alvéoles de retenue (5) de l'élément de réception (1), également dimensionnellement adaptées aux sections transversales des conduites, des organes d'accrochage (12) étant en l'occurrence réalisés solidaires par moulage des deux extrémités de l'élément de réception (1) et de l'étrier de blocage (2) qui, lors du rabattement de l'étrier de blocage (2) sur l'élément de réception (1) viennent s'imbriquer en prise d'encastrement réciproque, **caractérisé en ce que** les pattes de serrage (6) de plusieurs alvéoles de retenue (5) disposées côte à côte sont par paire respectivement décalées sans se toucher mutuellement aussi bien dans le sens longitudinal que dans le sens transversal des conduites à fixer en position, les pattes de serrage (6) voisines de deux alvéoles de retenue (5) se recouvrant en l'occurrence partiellement et **en ce que** les pattes de serrage (6) d'au moins une alvéole de retenue (5) sont décalées l'une par rapport à l'autre dans le sens longitudinal de la conduite à fixer en position.

2. Support de canalisations selon la revendication 1, **caractérisé en ce que** les pattes de serrage (6) enserrent au moyen d'ergots d'accrochage inclinés l'un vers l'autre (7) les alvéoles de retenue (5, 5') dans deux plans respectivement superposés.

3. Support de canalisations selon la revendication 1, **caractérisé en ce que** deux alvéoles de retenue (5) disposées côte à côte dans un plan sont respectivement séparées l'une de l'autre par une paroi de séparation inférieure (3) et sont enserrées par deux pattes de serrage (6) se dressant sur les deux côtés, des ergots d'accrochage (7) cintrés et inclinés l'un vers l'autre étant en l'occurrence prévus au niveau des extrémités libres des pattes de serrage (6), qui, conjointement à la face antérieure bombée (8) de la paroi de séparation (3) définissent une autre alvéole de retenue (5) pour une autre conduite d'alimentation.
